# EUROPEAN PATENT SPECIFICATION

(11) **EP 2 748 880 B1**
(45) Date of publication and mention of the grant of the patent: **19.07.2017**
(21) Application number: 11748669.6
(22) Date of filing: 25.08.2011
(51) Int. Cl.: B25F 5/02, H01M 2/10

(54) **BATTERY PACK AND BATTERY POWERED TOOL**
BATTERIEPACK UND BATTERIEBETRIEBENES WERKZEUG
BLOC-PILE ET OUTIL ALIMENTÉ PAR PILE

(43) Date of publication of application: 02.07.2014
(73) Proprietor: HUSQVARNA AB, 561 82 Huskvarna (SE)
(72) Inventor: RIEF, Joachim, 88422 Alleshausen (DE)
(86) International application number: PCT/EP2011/064665
(87) International publication number: WO 2013/026490

(56) References cited:
- EP-A1- 1 282 188
- WO-A2-01/75989
- US-A- 6 014 009
- US-A1- 2002 043 959

## Description

### TECHNICAL FIELD

Example embodiments generally relate to battery powered equipment and, more particularly, relate to hand-held power equipment that is battery powered, and a battery pack for such equipment.

### BACKGROUND

Property maintenance tasks are commonly performed using various tools and/or machines that are configured for the performance of corresponding specific tasks. Certain tasks, like cutting trees, trimming vegetation, blowing debris and the like, are typically performed by hand-held tools or power equipment. The hand-held power equipment may often be powered by gas or electric motors. Until the advent of battery powered electric tools, gas powered motors were often preferred by operators in need of a great deal of mobility without the hassle of corded attachment to an electrical power source. However, as battery technology continues to improve, the robustness of hand-held power equipment that is battery powered has also improved and such devices have increased in popularity.

The batteries employed in hand-held power equipment may, in some cases, be removable and/or rechargeable. Given that batteries can be relatively heavy components, the batteries can have an impact on the stability of the equipment they power. The lighter the equipment being powered, the more significant the weight of the battery becomes on balancing the equipment or impacting equipment stability. To make well a battery for a particular piece of equipment, battery size and weight distribution may be design factors that result in the production of a battery that is really only useful for a single piece of equipment and may have completely different shapes and/or sizes than other batteries produced for other equipment at the same factory. This may result in inefficiencies on production lines. A battery pack with a parallel array of cells disposed within the housing in a direction orthogonal to the direction of insertion is known from US 2002/0043959 A1.

### BRIEF SUMMARY OF SOME EXAMPLES

Some example embodiments may provide a battery pack configuration that may enable the same basic configuration to be used with a plurality of different types of equipment. For example, battery packs of some embodiments may be produced to have a consistent profile or cross section relative to the battery compartments into which they may be inserted regardless of the size of the battery packs (e.g., regardless of the number of cells within the battery pack). Thus, for example, a battery pack of some embodiments may be designed such that battery cells therein are arranged adjacent to each other with their longitudinal lengths substantially orthogonal to a direction of insertion of the battery pack into the battery compartment. Moreover, across various different sizes of battery packs provided according to an example embodiment, the battery cells may be further arranged in a series of columns and rows such that the number of cells arranged adjacent to one another in any column or row that lies in a direction substantially orthogonal to the direction of insertion is consistent, but the number of cells arranged adjacent to one another in a column or row that lies in a direction substantially parallel to the direction of insertion may be increased or decreased as needed to support a given battery output requirement. Accordingly, while battery packs of various sizes may be produced, the dimensions of the battery pack relative to the size of the aperture needed to receive the battery pack may be consistent regardless of the number of cells included in the battery pack.

In one example embodiment, a battery pack for powering hand-held power equipment is provided. The battery pack may include a plurality of cells and a housing. The plurality of cells may be arranged in a series of columns. The housing may include sidewalls that enclose the plurality of cells on sides parallel to a direction of insertion of the battery pack into an aperture in the hand-held power equipment. The plurality of cells may also be arranged such that a longitudinal length of each of the cells is substantially orthogonal to a direction of insertion of the battery pack into the aperture.

In another example embodiment, a battery powered tool is provided. The battery powered tool may include an aperture and a battery pack. The aperture may form a battery compartment within a tool body of the battery powered tool. The battery powered tool may power the battery powered tool responsive to insertion of the battery pack into the aperture. The battery pack may include a plurality of cells and a housing. The plurality of cells may be arranged in a series of columns. The housing may include sidewalls that enclose the plurality of cells on sides parallel to a direction of insertion of the battery pack into an aperture in the hand-held power equipment. The plurality of cells may also be arranged such that a longitudinal length of each of the cells is substantially orthogonal to a direction of insertion of the battery pack into the aperture.

Some example embodiments may improve the performance and/or the efficacy of a battery powered hand-held power equipment.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1A illustrates a perspective view of a battery pack according to an example embodiment;
FIG. 1B shows a cross section view of the battery cells in the battery pack of FIG. 1A according to an example embodiment;
FIG. 2 illustrates a perspective view of a ten cell battery pack according to an embodiment of the present invention;
FIG. 3 illustrates a perspective view of a thirty cell battery pack according to an embodiment of the present invention;
FIG. 4 illustrates one example of an electric power tool that may employ a battery pack of an example embodiment;
FIG. 5 illustrates an alternative example of an electric power tool that may employ a battery pack of an example embodiment; and
FIG. 6 illustrates a cross sectional view through the battery pack along a plane substantially parallel to the direction of insertion and substantially perpendicular to the longitudinal direction of the cells of the battery pack according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments may provide for a battery pack that can be useful in connection with battery powered tools such as hand-held outdoor power equipment. Outdoor power equipment often operates in hostile environments for electrical contacts. In this regard, the work performed by such equipment often generates dust and debris that may foul or interfere with electrical connections. Although many outdoor power equipment devices are now produced with battery packs instead of wired power sources in order to allow operators freedom of movement and reduced operating restrictions, the battery packs may be mated with such devices in a manner that provides crevices or surfaces upon which dust and debris may adhere. To help prevent dust and debris from fouling electrical contacts, some example embodiments may provide a battery compartment to receive the battery pack as an aperture that surrounds or encloses the battery pack on at least four sides that all lie in planes that are substantially parallel to the direction of insertion of the battery pack into the battery compartment. The aperture of the battery compartment is a through aperture, which leaves opposing end walls of the battery pack either exposed or extending out of right and left (or top and bottom) sides of the tool in which the battery compartment is provided.

Some example embodiments of the present invention may provide for the arrangement of battery cells adjacent to each other within a battery pack such that their longitudinal lengths are substantially orthogonal to a direction of insertion of the battery pack into the battery compartment. Example embodiments may further provide for arrangement of the cells in a battery pack in a series of columns and rows such that, across various different sizes of battery packs, the number of cells arranged adjacent to one another in any column or row that lies in a direction substantially orthogonal to the direction of insertion is consistent, but the number of cells arranged adjacent to one another in a column or row that lies in a direction substantially parallel to the direction of insertion may be increased or decreased as needed to support a given battery output requirement. Accordingly, battery packs of many different sizes and/or capacities may be produced. However, the battery packs would generally be sized such that the dimensions of many different sized battery packs relative to the size of the aperture needed to receive the battery packs may be consistent regardless of the number of cells included in the battery pack. Accordingly, equipment and battery pack housings may be designed to consistent specifications in terms of aperture size across different models. Moreover, while variation may exist in relation to the length of the battery pack, each battery pack will be designed to have a balance point generally at the center of the battery pack regardless of the number of additional columns or rows that are added along a direction parallel to the direction of insertion.

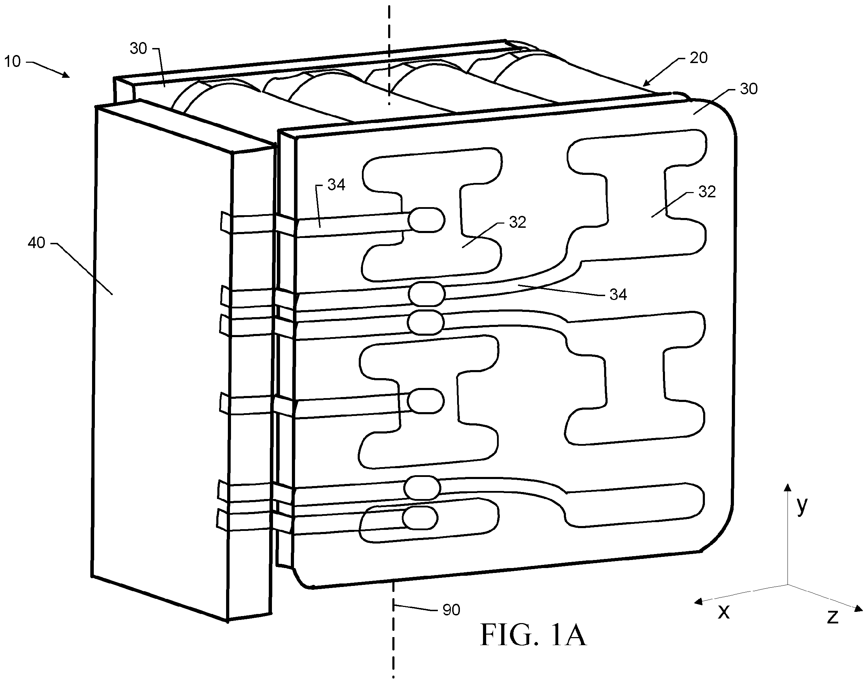

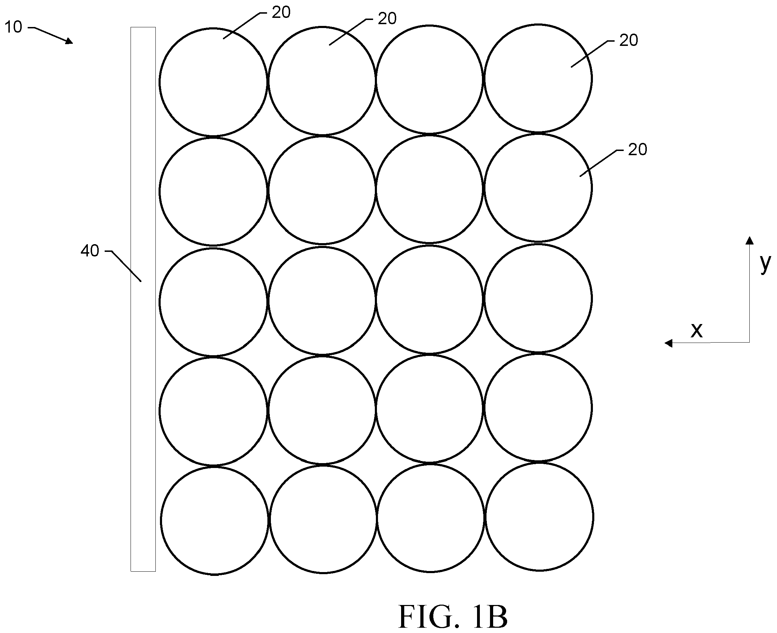

FIG. 1A illustrates a perspective view of a battery pack 10 according to an example embodiment. FIG. 1B shows a cross section view of battery cells 20 in the battery pack of FIG. 1A. The battery cells 20 may be, for example, Lithium-Ion, Nickel-Cadmium, or other like based cells. Moreover, in some cases the battery cells 20 may be either rechargeable or replaceable cells. The number and type of the battery cells 20 may be selected based on various parameters, such as, but not limited to, power and charge requirements, cost, weight and dimensions of the electric power equipment device that the battery pack 10 is designed to power. As shown in FIG. 1A, the battery cells 20 may be arranged between assembly walls 30. The assembly walls 30 may be disposed to lie in planes that are parallel to each other and are also parallel to a direction of insertion of the battery pack 10 into a battery compartment of a power equipment device powered by the battery pack 10. As such, the direction of insertion may be along the x-direction. Meanwhile, the assembly walls 30 may each lie in parallel x-y planes.

The assembly walls 30 of some embodiments may include contact plates 32 and connector runs 34 that are disposed to contact terminals of the battery cells 20. In an example embodiment, all of the negative terminals of the battery cells 20 may be in contact with contact plates 32 disposed on one of the assembly walls 30, while all of the positive terminals of the battery cells 20 may be in contact with contact plates 32 of the other one of the assembly walls 30. The contact plates 32 may be in communication with groups of the battery cells 20 (any suitable grouping may be utilized) to connect some of the battery cells 20 to each other electrically in series or parallel connections. The contact plates 32 may also be in communication with corresponding ones of the connector runs 34 to further electrically connect groups of the battery cells 20 to a printed circuit board (PCB) 40. The PCB 40 may then include or otherwise be in communication with an electrical connector that communicates with a corresponding connector on the electric power tool to which power is provided by the battery pack 10.

In an example embodiment, the PCB 40 may be disposed at a leading or trailing edge of the battery cells 20 as the battery pack 10 is inserted into an aperture of a battery compartment. In other words, the PCB 40 may enter the aperture prior to entry of any of the cells or after entry of all of the cells responsive to insertion of the battery pack 10 into the aperture. A combined output of the battery cells 20 (e.g., based on series and/or parallel connections of various groups of the battery cells) may be generated at the PCB 40 for communication to the power equipment device. As such, in some cases, the PCB 40 may actively manage the output of the battery pack 10. However, in other examples, the PCB 40 may merely passively manage the output of the battery pack 10. In other words, the PCB 40 may merely measure cell voltages, without guiding current, in order to communicate the cell voltages to a readout or display (e.g., LED lights) disposed at an end wall proximate to the PCB 40. The PCB 40 may also be configured to detect and/or protect against certain fault conditions. Although not shown in FIGS. 1A and 1B, the battery pack 10 may be further enclosed within a housing that may substantially surround the battery pack 10 on some or all sides of the battery pack 10. However, a housing is not necessarily required in some example embodiments.

The battery cells 20 may be arranged in columns and rows such that a longitudinal length of each cell lies substantially orthogonal (or perpendicular) to the direction of insertion (e.g., the x-direction). As such, the longitudinal length of each cell may substantially lie parallel to the z-direction. In this example, columns of cells may lie in the y-direction such that the corresponding cells are in the y-z plane which lies substantially perpendicular to the direction of insertion. Meanwhile, rows of cells may lie in the x-direction such that the corresponding cells are in the x-z plane, which lies substantially parallel to the direction of insertion. In some cases, the columns may be disposed at an angle relative to the y-z plane, such that an offset configuration of cells is provided.

Providing the battery cells 20 in columns and rows as indicated in FIGS. 1A and 1B may provide for the connector runs 34 to be relatively short in order to combine the outputs of the battery cells 20. Furthermore, providing the battery cells 20 in columns and rows as indicated in FIGS. 1A and 1B may also enable airflow to pass between the battery cells 20. In some embodiments, spacing may be provided (e.g., using spacer members) between the battery cells 20 to separate rows and/or columns from each other to at least some degree in order to further increase the capacity for airflow between the battery cells 20. In an example embodiment, spacing along the x-direction may be provided to increase airflow. Moreover, the addition of more cells to any arrangement may also be provided along the x-direction. Accordingly, different models of battery packs may all have the same dimensions in the y-z plane, but the dimensions along the x-direction may be adjusted to fit any size or capacity needed for different models.

By providing fixed dimensions of the battery pack 10 in the y-z plane, an aperture size for battery compartments associated with different power equipment may be consistent regardless of the size of the battery pack 10. This may allow for different models of power equipment to use similar battery pack configurations making the production of both the power equipment and the battery packs themselves more streamlined and efficient.

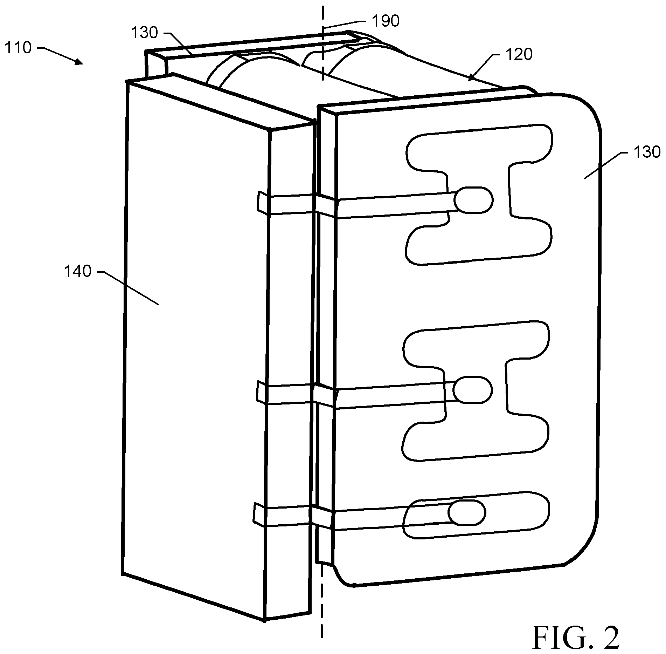

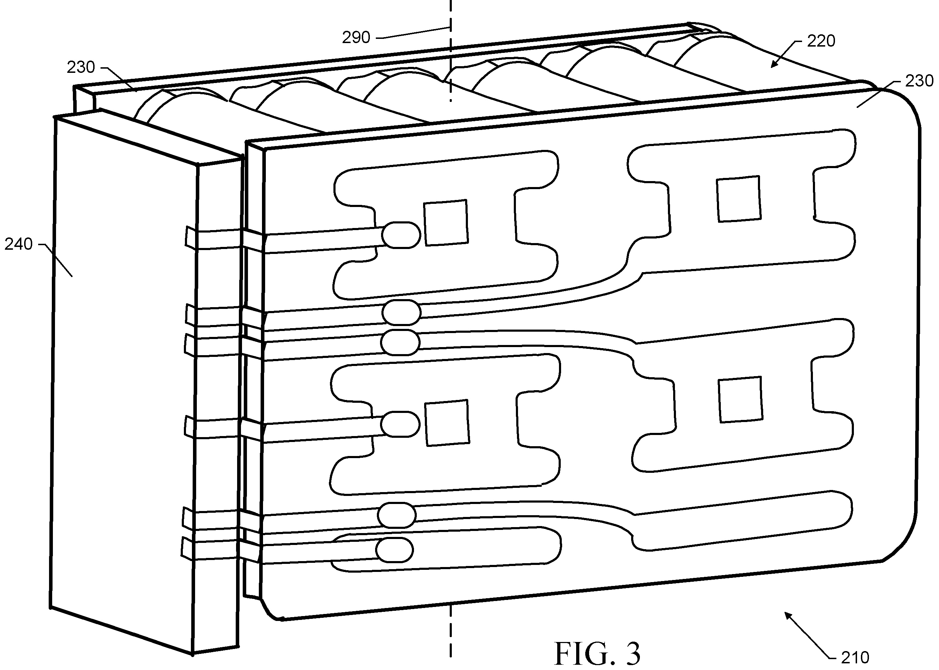

Of note, the example of FIG. 1A and 1B shows the battery pack 10 having a five cell per column arrangement. Given that a four cell per row arrangement is provided, there are twenty cells (i.e., four columns of five cells each) provided in the battery pack 10 of FIGS. 1A and 1B. In this arrangement, any battery pack model size or capacity changes would be provided by adding or subtracting cells along the x-direction. Thus, for example, a ten cell battery pack could easily be provided having the same dimensions in the y-z plane as the twenty cell battery pack shown in FIGS. 1A and 1B simply by providing two less columns. An example of such an arrangement for a ten cell battery pack is shown in FIG. 2. As can be seen in FIG. 2, the battery pack 110 includes ten battery cells 120 that are disposed between assembly walls 130 and connected to a PCB 140. Meanwhile, a battery pack 210 including thirty battery cells 220 is shown in FIG. 3 with the battery cells 220 being disposed such that longitudinal lengths of the battery cells 220 extend substantially perpendicular to the direction of insertion (e.g., the x-direction) between assembly walls 230. Again, PCB 240 combines the outputs of the battery cells 220. Cell configurations could also be changed by aligning multiple cells in series along the longitudinal axis of the cells.

In FIGS. 1A, 1B, 2 and 3, the dimensions of the battery packs (10, 110 and 210) are the same along the y-z plane. Thus, accommodating more or fewer cells in each instance may simply be accomplished by expanding or contracting the size of the battery pack in the x-direction. Additionally, it should be appreciated that any number of cells per column may be employed based on the diameter of the cells used and the desired profile of the battery pack in light of the size of the aperture it is designed to fit within. Thus, although a five cell per column embodiment is shown, any other number of cells per column could alternatively be employed. Thus, for example, if a four cell per column embodiment were employed, it would be relatively easy to provide 8 cell, 16 cell or 24 cell battery packs by simply extending the assembly walls along the x-direction to accommodate additional columns of cells. Furthermore, regardless of the number of columns added, the resulting battery pack generally maintains a consistent balance point generally at a center of the battery pack with respect to the x-direction along the y-z plane. Dotted lines 90, 190 and 290, respectively, illustrate an approximate balance point of the battery packs 10, 110 and 210 of FIGS. 1A, 2 and 3. Having a balance point near a center of the battery pack may improve the operability of the corresponding tool in which the battery pack is used.

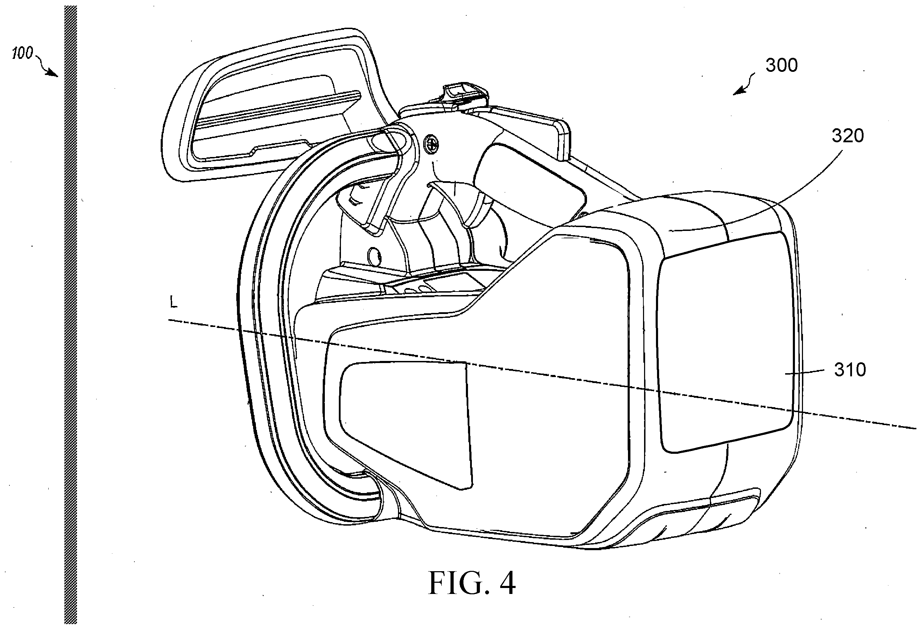

FIG. 4 illustrates one example of an electric power tool 300 that may employ a battery pack of an example embodiment. In this regard, battery pack 310 is shown in a housing that, after insertion of the battery pack 310 into a tool body 320 of the electric power tool 300, leaves only one exposed end wall visible (e.g., a wall on an opposite side of the battery pack 310 housing as the side on which the PCB is disposed). The opposing end wall (e.g., a covered end wall) may be disposed within the aperture forming the battery compartment of the electric power tool 300. Meanwhile, sidewalls surrounding each of the assembly walls and adjacent to the outermost cells that are exposed (i.e., cells having a side not covered by another cell, the PCB or the covered end wall) may enclose portions of the battery pack 310 that are between the exposed end wall and the covered end wall.

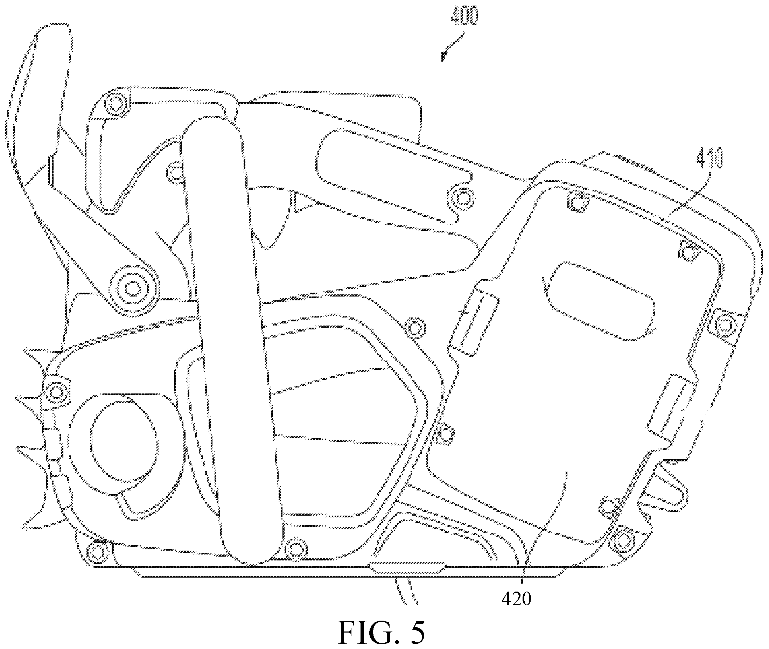

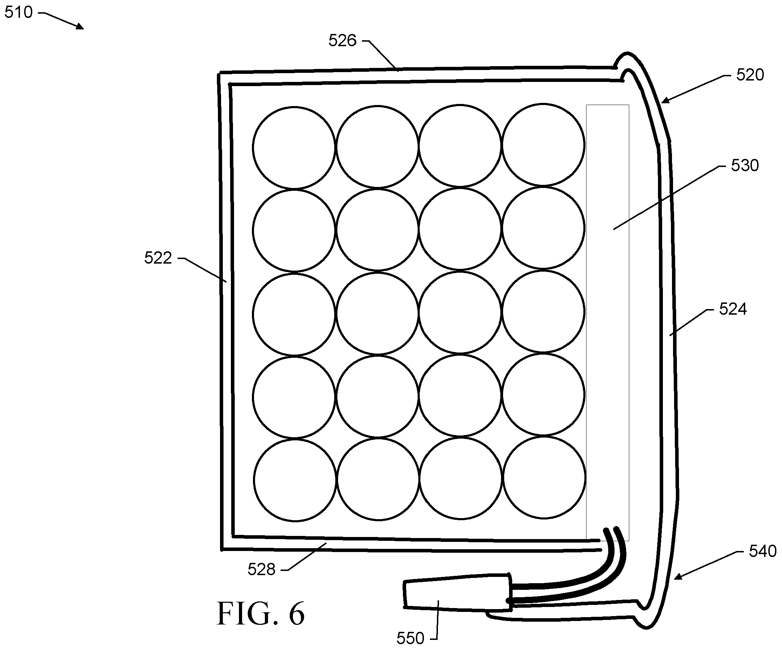

In the example of FIG. 4, the battery pack 310 is inserted into an aperture at the back end of a tool body 320 of the electric power tool 300. However, a battery pack could alternatively be inserted into an aperture disposed on a side of the tool body 320 (e.g., as shown in FIG. 5). The aperture is a through aperture (e.g., as a right to left through aperture or top to bottom through aperture) so that both end walls of the battery pack may be exposed end walls. However, in any case, the cells within the battery pack 310 or 420 may be disposed such that a longitudinal length of the cells is disposed orthogonally with respect to the direction of insertion of the battery pack 310 or 420 in to the aperture on the electric power tool 300 or 400. In some cases, the PCB may always enter the aperture first; however, other example embodiments may be arranged such that the PCB enters the aperture last (see FIG. 6). Thus, the PCB may be disposed at a leading portion of the battery pack when insertion of the battery pack into the tool body is accomplished or at a trailing portion of the battery pack when insertion of the battery pack into the tool body is accomplished.

The electric power tool 400 of FIG. 5 has an aperture at a side portion of the tool body 410 and the battery pack 420 fits into the side of the tool body 410. In this regard, as the battery pack 420 is inserted into the side of the tool body 410, sidewalls forming an aperture in the tool body 410 become proximate to corresponding sidewalls of a housing of the battery pack 420. Meanwhile, a PCB inside the battery pack 420, which aggregates the outputs of the battery cells of the battery pack 420, enters the aperture prior to entry of any of the cells.

FIG. 6 illustrates a battery pack 510 that may be inserted into an aperture of a tool body such as either of the apertures of the tool bodies shown in FIGS. 4 and 5. In this regard, FIG. 6 illustrates a cross sectional view through the battery pack 510 along a plane substantially parallel to the direction of insertion and substantially perpendicular to the longitudinal direction of the cells of the battery pack 510. As shown in FIG. 6, the battery pack 510 may include a housing 520 that may include two end walls. In this example, a first end wall 522 may be disposed proximate to an interior portion of the tool body of the tool into which the battery pack 510 is inserted responsive to insertion of the battery pack 510 into an aperture of the tool body. Meanwhile, the second end wall 524 may be disposed on an opposite side of the cells of the battery pack 510 relative to the first end wall 522. The second end wall 524 may be exposed responsive to insertion of the battery pack 510 into an aperture of the tool body. In some cases, the second end wall 524 may include LED lights or other indicators to receive information from PCB 530 that is indicative of the state of charge of the battery pack 510.

The housing 520 may further include sidewalls (two shown in FIG. 6 including sidewall 526 and 528) that extend between end portions of each of the end walls in order to enclose the battery cells of the battery pack 510. One of the sidewalls may have an extension 540 proximate thereto and the extension 540 may include a connector 550 that may be configured to provide an electrical connection between the PCB 530 of the battery pack 510 and a corresponding electrical connector on a sidewall of the aperture in the tool body of the device or tool receiving the battery pack 510. The connector 550 may be seated in the connector on the sidewall of the aperture in order to electrically connect the battery pack 510 and the tool responsive to insertion of the battery pack 510 into the aperture of the tool. As such, the aperture of the tool may include sidewalls that correspond to each of the sidewalls of the housing 520, and an internal end wall that may correspond to the first end wall 522 of the battery pack 510. However, as indicated above, some embodiments may employ a through aperture such that both the first end wall 522 and the second end wall 524 are exposed out the sides (or top and bottom) of the tool body.

Although the electric power tools 300 and 400 of the examples shown in FIGS. 4 and 5 are chain saws, it should be appreciated that other hand held equipment could also employ example embodiments. Thus, for example, in other embodiments, the battery pack 310 could be employed in connection with line trimmers, hedge trimmers, drills, reciprocating saws, rotary saws, power screw drivers, cutting tools, pruning tools, edgers, blowers, or numerous other types of electric power tools.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A hand-held, battery powered tool (400) comprising:
an aperture forming a battery compartment within a tool body (410) of the battery powered tool (400); and
a battery pack (510) for powering the battery powered tool (400), the battery pack comprising:
a plurality of cells (20) arranged in a series of columns; and
a housing (520) including opposing end walls (522, 524) and sidewalls (526, 528), the sidewalls (526, 528) enclosing the plurality of cells (20) on sides parallel to a direction of insertion of the battery pack (510) into an aperture in the battery powered tool (400);
**characterized in that** the plurality of cells (20) is arranged such that a longitudinal length of each of the cells is substantially orthogonal to a direction of insertion of the battery pack (510) into the aperture, and
**in that** the aperture is a through aperture passing through the tool body (410) such that both of the opposing end walls (522, 524) are exposed responsive to insertion of the battery pack (510) into the aperture.

2. The battery powered tool (400) of claim 1, **characterized in that** the battery pack (510) further includes a pair of assembly walls (30), each of which is disposed to contact a respective opposite end of each of the cells, and each of the assembly walls (30) includes contact plates (32) electrically coupled to the plurality of cells (20) to detect an output of the plurality of cells (20) at a printed circuit board (530) in communication with the plurality of cells (20).

3. The battery powered tool (400) of claim 2, **characterized in that** the printed circuit board (530) is disposed proximate to a longitudinal face of cells in a first column of the series of columns.

4. The battery powered tool (400) of claim 3, **characterized in that** the printed circuit board (530) is disposed at a leading edge of the plurality of cells (20) such that the printed circuit board (530) enters the aperture prior to entry of any of the cells or at a trailingedge of the plurality of cells (20) such that the printed circuit board (530) enters the aperture after entry of any of the cells responsive to insertion of the battery pack (510) into the aperture.

5. The battery powered tool (400) of claim 1, **characterized in that** one sidewall (528) of the housing (520) includes an extension (540) having a connector (550) for electrically connecting the battery pack (510) to the battery powered tool (400).

6. The battery powered tool (400) of claim 1, **characterized in that** the through aperture passes through the tool body (410) from side to side.

7. The battery powered tool (400) of claim 1, **characterized in that** the through aperture passes through the tool body (410) from top to bottom.

8. The battery powered tool (400) of claim 1, **characterized in that** the aperture is located in a side or back portion of the tool body (410).

9. The battery powered tool (400) of claim 1, **characterized in that** the aperture is located in a top or bottom portion of the tool body (410).

10. The battery powered tool (400) of claim 1, **characterized in that** the sidewalls (526, 528) are each disposed proximate to respective sidewalls of the aperture in the battery powered tool (400) responsive to insertion of the battery pack (510) into the aperture.

## Patentansprüche

1. In der Hand gehaltenes, batteriebetriebenes Werkzeug (400), umfassend:
eine Öffnung, die ein Batteriefach innerhalb eines Werkzeugkörpers (410) des batteriebetriebenen Werkzeugs (400) bildet; und
ein Batteriepaket (510) zur Versorgung des batteriebetriebenen Werkzeugs (400), wobei das Batteriepaket umfasst:
eine Vielzahl von Zellen (20), die in einer Reihe von Säulen angeordnet sind; und
ein Gehäuse (520) mit gegenüberliegenden Endwänden (522, 524) und Seitenwänden (526, 528), wobei die Seitenwände (526, 528) die Vielzahl von Zellen (20) an Seiten, die parallel zu einer Einführungsrichtung des Batteriepakets (510) in eine Öffnung in dem batteriebetriebenen Werkzeug (400) ist, umschließen;
**dadurch gekennzeichnet, dass** die Vielzahl von Zellen (20) so angeordnet ist, dass eine Länge jeder der Zellen im Wesentlichen im rechten Winkel auf eine Einführungsrichtung des Batteriepakets (510) in die Öffnung steht, und
dass die Öffnung eine Durchgangsöffnung ist, die durch den Werkzeugkörper (410) hindurch verläuft, so dass beide entgegengesetzten Endwände (522, 524) in Ansprechen auf die Einführung des Batteriepakets (510) in die Öffnung freiliegen.

2. Batteriebetriebenes Werkzeug (400) nach Anspruch 1, **dadurch gekennzeichnet, dass** das Batteriepaket (510) ferner ein Paar Montagewände (30) umfasst, die jeweils angeordnet sind, um mit einem jeweiligen entgegengesetzten Ende einer jeden der Zellen in Kontakt zu stehen, und wobei jede der Montagewände (30) Kontaktplatten (32) umfasst, die elektrisch mit der Vielzahl von Zellen (20) gekoppelt sind, um einen Ausgang der Vielzahl von Zellen (20) an einer gedruckten Schaltungsplatte (530) in Kommunikation mit der Vielzahl von Zellen (20) zu erfassen.

3. Batteriebetriebenes Werkzeug (400) nach Anspruch 2, **dadurch gekennzeichnet, dass** die gedruckte Schaltungsplatte in unmittelbarer Nähe einer Längsseite von Zellen einer ersten Säule der Reihe von Säulen angeordnet ist.

4. Batteriebetriebenes Werkzeug (400) nach Anspruch 3, **dadurch gekennzeichnet, dass** die gedruckte Schaltungsplatte (530) an einer vorderen Kante der Vielzahl von Zellen (20) angeordnet ist, so dass die gedruckte Schaltungsplatte (530) in die Öffnung eintritt, bevor eine der Zellen an einer hinteren Kante der Vielzahl von Zellen (20) eintritt, so dass die gedruckte Schaltungsplatte (530) in die Öffnung eintritt, bevor eine der Zellen in Ansprechen auf das Einführen des Batteriepakets (510) in die Öffnung in die Öffnung eintritt.

5. Batteriebetriebenes Werkzeug (400) nach Anspruch 1, **dadurch gekennzeichnet, dass** eine Seitenwand (528) des Gehäuses (520) eine Verlängerung (540) mit einem Anschluss (550) zum elektrischen Verbinden des Batteriepakets (510) mit dem batteriebetriebenen Werkzeug (400) umfasst.

6. Batteriebetriebenes Werkzeug (400) nach Anspruch 1, **dadurch gekennzeichnet, dass** die Durchgangsöffnung von einer Seite zur anderen durch den Werkzeugkörper (410) verläuft.

7. Batteriebetriebenes Werkzeug (400) nach Anspruch 1, **dadurch gekennzeichnet, dass** die Durchgangsöffnung von oben nach unten durch den Werkzeugkörper (410) verläuft.

8. Batteriebetriebenes Werkzeug (400) nach Anspruch 1, **dadurch gekennzeichnet, dass** die Öffnung sich in einem Seiten- oder Rückabschnitt des Werkzeugkörpers (410) befindet.

9. Batteriebetriebenes Werkzeug (400) nach Anspruch 1, **dadurch gekennzeichnet, dass** die Öffnung sich in einem oberen oder unteren Abschnitt des Werkzeugkörpers (410) befindet.

10. Batteriebetriebenes Werkzeug (400) nach Anspruch 1, **dadurch gekennzeichnet, dass** die Seitenwände (526, 528) jeweils in unmittelbarer Nähe zu den jeweiligen Seitenwänden der Öffnung in dem batteriebetriebenen Werkzeug (400) angeordnet sind, in Ansprechen auf die Einführung des Batteriepakets (510) in die Öffnung.

## Revendications

1. Outil portatif alimenté par batterie (400) comprenant :
une ouverture formant un compartiment de batterie dans un corps d'outil (410) de l'outil alimenté par batterie (400) ; et
un bloc-batterie (510) pour alimenter l'outil alimenté par batterie (400), le bloc-batterie comprenant :
une pluralité d'éléments (20) agencés en une série de colonnes ; et
un boîtier (520) comportant des parois d'extrémité opposées (522, 524) et des parois latérales (526, 528), les parois latérales (526, 528) entourant la pluralité d'éléments (20) sur des côtés parallèles à une direction d'insertion du bloc-batterie (510) dans une ouverture de l'outil alimenté par batterie (400) ;
**caractérisé en ce que** la pluralité d'éléments (20) sont agencés de sorte qu'une longueur longitudinale de chacun des éléments soit essentiellement orthogonale à une direction d'insertion du bloc-batterie (510) dans l'ouverture, et
**en ce que** l'ouverture est une ouverture traversante qui traverse le corps d'outil (410) de sorte que les deux parois d'extrémité opposées (522, 524) soient exposées en réponse à l'insertion du bloc-batterie (510) dans l'ouverture.

2. Outil alimenté par batterie (400) de la revendication 1, **caractérisé en ce que** le bloc-batterie (510) comporte en outre une paire de parois d'assemblage (30), dont chacune est disposée pour entrer en contact avec une extrémité opposée respective de chacun des éléments, et chacune des parois d'assemblage (30) comporte des plaques de contact (32) électriquement couplées à la pluralité d'éléments (20) pour détecter une sortie de la pluralité d'éléments (20) au niveau d'une carte de circuit imprimé (530) en communication avec la pluralité d'éléments (20).

3. Outil alimenté par batterie (400) de la revendication 2, **caractérisé en ce que** la carte de circuit imprimé (530) est disposée à proximité d'une face longitudinale d'éléments dans une première colonne de la série de colonnes.

4. Outil alimenté par batterie (400) de la revendication 3, **caractérisé en ce que** la carte de circuit imprimé (530) est disposée au niveau d'un bord avant de la pluralité d'éléments (20) de sorte que la carte de circuit imprimé (530) rentre dans l'ouverture avant l'entrée de l'un quelconque des éléments ou au niveau d'un bord arrière de la pluralité d'éléments (20) de sorte que la carte de circuit imprimé (530) rentre dans l'ouverture après l'entrée de l'un quelconque des éléments en réponse à l'insertion du bloc-batterie (510) dans l'ouverture.

5. Outil alimenté par batterie (400) de la revendication 1, **caractérisé en ce qu'**une paroi latérale (528) du boîtier (520) comporte une extension (540) ayant un connecteur (550) pour connecter électriquement le bloc-batterie (510) à l'outil alimenté par batterie (400).

6. Outil alimenté par batterie (400) de la revendication 1, **caractérisé en ce que** l'ouverture traversante traverse le corps d'outil (410) d'un côté à l'autre.

7. Outil alimenté par batterie (400) de la revendication 1, **caractérisé en ce que** l'ouverture traversante traverse le corps d'outil (410) de haut en bas.

8. Outil alimenté par batterie (400) de la revendication 1, **caractérisé en ce que** l'ouverture est située dans une partie latérale ou arrière du corps d'outil (410).

9. Outil alimenté par batterie (400) de la revendication 1, **caractérisé en ce que** l'ouverture est située dans une partie supérieure ou inférieure du corps d'outil (410).

10. Outil alimenté par batterie (400) de la revendication 1, **caractérisé en ce que** chacune des parois latérales (526, 528) est disposée à proximité des parois latérales respectives de l'ouverture dans l'outil alimenté par batterie (400) en réponse à l'insertion du bloc-batterie (510) dans l'ouverture.
